# EUROPEAN PATENT SPECIFICATION

(11) **EP 4 005 378 B1**
(45) Date of publication and mention of the grant of the patent: **27.08.2025**
(21) Application number: 21020588.6
(22) Date of filing: 23.11.2021
(51) Int. Cl.: A01K 85/16, A01K 85/00

(54) **WOBBLER WITH ADJUSTABLE GRAVITY CENTRE LOCATION**
WOBBLER MIT VERSTELLBARER SCHWERPUNKTSTELLE
LEURRE DE PÊCHE WOBBLER AVEC EMPLACEMENT DE CENTRE DE GRAVITÉ RÉGLABLE

(30) Priority: 26.11.2020 EE 202000019
(43) Date of publication of application: 01.06.2022
(73) Proprietor: Osaühing Tarvos Grupp, 8033 Pärnu, Pärnu maakond (EE)
(72) Inventor: Soll, Hans, 80024 Pärnu, Pärnu maakond (EE)
(74) Representative: Koitel, Raivo

(56) References cited:
- JP-B2- 3 844 681
- US-A1- 2002 043 016
- US-A1- 2019 208 756

## Description

### Technical field

The invention belongs in the area of lures used in recreational and sport fishing, specifically the area of wobblers the properties of which a fisher can change at the fishing location, more specifically the area of wobblers for which movement properties are changed by changing the height of their gravity centre relative to the middle axis of the housing.

### Prior art

Prior art teaches both handmade and industrially made wobblers that differ from one another by dimensions, mass, shape and movement characteristics. Therefore, when a fisher goes on a fishing trip, they have with them several dozens of different wobblers that are expensive to procure. A successfully selected wobbler may also get tangled with plants or other foreign bodies in the water, causing breakage of the fishing line and loss of the wobbler. However, a fisher does not have double supplies but the wobblers are different from one another. Therefore, there is a need for wobblers the characteristics of which a fisher would be able to change on spot while on a fishing trip. Thus, it is possible to reduce the quantity of wobblers to be taken along, as well as the purchase expenses.

Based on their knowledge, skills and experience, a fisher selects from among the wobblers they have taken along those that are suitable for the type of fish to be caught, the peculiarities of the body of water, weather conditions and time of day. The housings of wobblers are made from floating material. In order to adjust floating properties and change the nature of movement in water, there are many patented solutions where additional weights have been applied to the housing of wobblers for that purpose. An additional weight may be placed either inside or outside the housing, and its mass and location relative to the housing may be changeable. However, both the mass of the additional weight and its location in the housing change the gravity centre of the wobbler, causing a change also in its diving properties and the nature of its movement in water.

US2002/0043016 A1 (Kechriotis George, published on April 18, 2002) discloses a solution of an adjustable buoyancy device of a lure.

In the solution based on invention US2003110678 (Yong-Set Bernard, published on June 19, 2003), additional weights have been placed under the wobbler casing and attached to its rod along the longitudinal axis. For invention KR20050056854 (Shimano KK, published on June 16, 2005), the location of the additional weight placed under the casing may be shifted by a threaded adjustment assembly towards the longitudinal axis of the casing. A common drawback of additional weights under the casing is that additional weights placed under the centerline of the casing increase the stability of the wobbler, reducing the wobbly movement of the lure important for fishing.

As for solutions with additional weight placed inside the casing, a device from invention JPH07303436 (Saiga Takashi, published on November 21, 1995) is known with a hollow channel along the axis and a closing cap at the bottom of the casing. A solution based on invention US2007107295 (Kaptis Paul, published on May 17, 2007) is also known where from the lower part of the casing, a hole transversal to the central axis is drilled and a sleeve placed therein closed by a threaded cap. An additional weight has been attached to the cap, and by changing such caps it is possible to change the mass of the casing at the location of fishing, thus changing the floating properties of the wobbler. A common drawback of both solutions is that the location of the drilled hole relative to the central longitudinal axis of the casing has not been determined, as well as the fact that changing of the mass of the additional weight only changes the characteristics of the wobbler to a limited extent, changing mainly its floating properties and not its particular wobbly way of movement depending on the balance conditions.

A device presented in invention US3841012 (Maled C, published on October 15th, 1974) is also known, with a micro-engine placed into the wobbler casing, with an eccentric weight on its shaft that makes it move in uniform oscillations. In practice, it turned out that such regularly repeated uniform oscillations do not seem natural to the fish and do not lure them to the hook.

There are also known solutions for changing the oscillating movement of wobbler where the location of the additional weight may be permanently changed relative to the central axis of the casing.

The closest similar invention is the inventor's own earlier patented invention SU1694056 (Soll Hans, published on November 23, 1991). In the hollow casing of the wobbler there is an additional weight attached to the end of a movable threaded rod, and the wobbler's manner of movement is changed by shifting the additional weight horizontally to the central axis of the casing. This solution, however, has an insufficient effect to the movement of the wobbler, as the solution does not significantly impact the balance properties of its casing.

### Summary of the invention

The purpose of the present invention is to find a solution where the location of the additional weight impacts the oscillating manner of movement of the wobbler in such a way that it becomes more attractive to the fish to be caught.

The invention provides a wobbler with adjustable gravity centre location according to independent claim 1. Preferred embodiments of the invention are set out in the dependent claims.

According to the solution, the location of the gravity centre of the wobbler is changed in vertical direction relative to the central axis of the casing. For that purpose, a hole is drilled to the intended location of the gravity centre on the central axis of casing, which may be drilled in the casing from top or bottom, without penetrating it, or penetrating the whole casing.

Balance positions of a body floating in water depend on the height of the gravity centre relative to its central axis. If the gravity centre is lower than the central axis, the balance position is stable. If the gravity centre is at the central axis or near it, the balance position is idle or indifferent. If the gravity centre is higher than the central axis, the balance position is unstable. In the event of indifferent and unstable balance positions, the movement of a wobbler is most influenced by deliberate change of winding speed of the fishing line by the fisher, as well as various external factors like the impact of a change in the speed of wind on the fishing line, the impact of different speed of water flow to the wobbler. Besides the amplitude and frequency of oscillation, all such factors also impact other play properties of a wobbler.

The essence of the invention lies in the fact that at the fishing location, relying on their knowledge, skills and experience, the fisher can smoothly shift the height of the gravity centre relative to the central axis and thus change the balance properties of the wobbler, choosing an indifferent or unstable balance status. As the movement of a wobbler in water is simultaneously both harmonious oscillation and rotary movement depending on the mass of the casing, a fisher may select a suitable one from the additional weights with different masses having high specific gravity they have brought along. Thus: changing both the mass of the additional weight and its height from the central axis of the casing, it is possible to increase the number of play manners of the wobbler.

An additional purpose of the invention was to expand the possibilities of adjustment of the diving position and diving depth of the wobbler. Diving parameters of a wobbler depend on the winding speed of fishing line and the height of the loop for the fishing line on its mirror. For that purpose, the invention prescribes several loops that are located at different heights on the casing, above the central axis. If the winding speed required for the desired diving depth is insufficient, it is possible to select a higher loop for the fishing line.

An additional benefit of the invention is that it is suitable both for handmade and industrially made wobblers that are from different materials, with different size and shape.

### List of illustrations

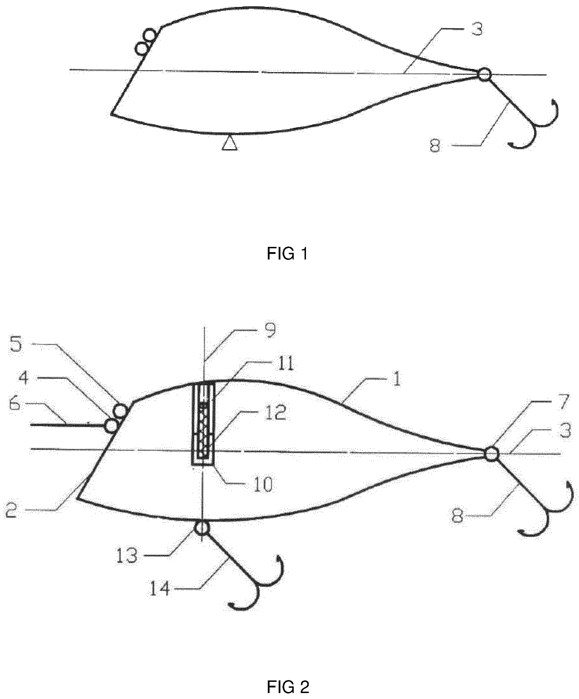

Fig 1 shows determination of gravity centre longitudinally at the central axis of the casing.
Fig 2 shows a side view of a wobbler adjustable from above.

### Embodiment of the invention

A wobbler with adjustable gravity centre location comprises casing 1 that is made from floating material, e.g. wood. The front part of casing 1, mirror 2 in fishing terminology, is a surface that is tilted upwards and to the rear. The tilting angle of mirror 2 is within 40 to 50 degrees from mirror 2 surface and the central axis 3 of the casing 1, based on the desired diving depth. Mirror 2 has loops 4 and 5 for attachment of fishing line 6. Loops 4 and 5 are located on the large half-axis of the ellipse-shaped mirror above its centre (above the central axis 3). The lower loop 4 is located at 1/3 and the top loop 5 is located at 2/3 of the distance of the longer half-axis from the centre of the ellipse. At the tail of casing 1 there is a loop 7 for attachment of fishing hook 8. Under the belly of the casing 1, on the vertical axis 9, there is a loop 13 for attachment of fishing hook 14.

In preferred embodiment, at the location of the gravity centre determined longitudinally on the central axis 3 of the casing 1 loaded with fishing hook 8, a hole 10 towards the vertical axis 9 has been drilled from top with depth 0.65 to 0.75 of the diameter of the casing 1, and a sleeve 11 with inner thread has been placed therein. The hole 10 may be drilled into casing 1 also from the bottom or through the whole diameter of casing 1. In the sleeve 11, there is an additional weight 12 with specific gravity made of material meeting environmental requirements (e.g. stainless steel) that can be shifted by threaded joint, with a recess on the top surface for shifting the weight by an appropriate tool (e.g. an Allen key). By shifting the changeable additional weight 12 also the height of the gravity centre of the wobbler relative to the central axis 3 of the casing 1 changes. Depending on the height of the location of the gravity centre, the nature of wobbler balance changes.

The additional weight 12 can be exchanged for one from the set of additional weights with different masses that the fisher has with them on the fishing trip, the mass depending on the dimensions of the wobbler itself, being within the limits of 0.2 to 0.25 of the mass of the casing loaded with fishing hooks 8 and 14.

The solution makes it possible for the fisher, relying on their knowledge, skills and experience, to use intermittent winding speed of the fishing line 6 in the event of indifferent and unstable balance position and thereby also change the oscillating movement frequency, amplitude and other play manners of the wobbler. In order to achieve the required diving depth of the wobbler, a fisher may combine the winding speed of fishing line 6 and the height of the loop used for attaching it.

## Claims

1. Wobbler with adjustable gravity centre location, the wobbler comprising a casing (1), a flat tilted mirror (2) with loops (4, 5) for attachment of a fishing line (6), loops (7, 13) for attachment of fishing hooks (8, 14), a hole (10) drilled on an intended location of the gravity center on the central axis of the casing (1), the hole (10) containing a sleeve with inner thread (11) and a movable threaded additional weight (12) for changing the location of the gravity centre of the casing (1), **characterized in that** the hole (10) is vertically perpendicular to the central axis (3) of the casing (1); **in that** the location of the gravity centre can be shifted higher than the height of the central axis (3) of the casing (1); and **in that** the additional weight (12) is with high specific gravity and exchangeable.

2. A wobbler with adjustable gravity centre location accordingly to claim 1,
**characterized in that** the hole (10) has been drilled in the casing (1) at the location of its gravity centre determined on its central axis (3).

3. A wobbler with adjustable gravity centre location accordingly to claim 1 and 2, **characterized in that** the hole (10) has been drilled in the casing (1) from the top.

4. A wobbler with adjustable gravity centre location accordingly to claim 1 and 2, **characterized in that** the hole (10) has been drilled in the casing (1) from the bottom.

5. A wobbler with adjustable gravity centre location accordingly to claims 1 to 4, **characterized in that** the hole (10) has been drilled in the casing (1) with depth of 0.65 to 0.75 of the diameter of the casing (1).

6. A wobbler with adjustable gravity centre location accordingly to claims 1 to 4, **characterized in that** the hole (10) has been drilled through the the casing (1).

7. A wobbler with adjustable gravity centre location accordingly to claims 1 to 6, **characterized in that** the mirror (2) has loops (4, 5) at different heights above the central axis (3) for attachment of the fishing line (6).

## Patentansprüche

1. Wobbler mit einstellbarer Schwerpunktlage, wobei der Wobbler ein Gehäuse (1), einen flachen, geneigten Spiegel (2) mit Schlaufen (4, 5) zum Anbringen einer Angelschnur (6), Schlaufen (7, 13) zum Anbringen von Angelhaken (8, 14), eine Bohrung (10), die in einer vorgesehenen Lage des Schwerpunkts auf der Mittelachse des Gehäuses (1) gebohrt ist, umfasst, wobei die Bohrung (10) eine Hülse mit Innengewinde (11) und ein bewegbares, mit Gewinde versehenes Zusatzgewicht (12) zum Ändern der Lage des Schwerpunkts des Gehäuses (1) enthält, **dadurch gekennzeichnet, dass** die Bohrung (10) vertikal senkrecht zu der Mittelachse (3) des Gehäuses (1) liegt; dadurch, dass die Lage des Schwerpunkts höher als die Höhe der Mittelachse (3) des Gehäuses (1) verschoben werden kann; und dadurch, dass das Zusatzgewicht (12) mit einem hohen spezifischen Gewicht vorliegt und austauschbar ist.

2. Wobbler mit einstellbarer Schwerpunktlage nach Anspruch 1, **dadurch gekennzeichnet, dass** die Bohrung (10) in das Gehäuse (1) in der Lage seines Schwerpunkts, die auf seiner Mittelachse (3) bestimmt ist, gebohrt wurde.

3. Wobbler mit einstellbarer Schwerpunktlage nach Anspruch 1 und 2, **dadurch gekennzeichnet, dass** die Bohrung (10) von oben in das Gehäuse (1) gebohrt wurde.

4. Wobbler mit einstellbarer Schwerpunktlage nach Anspruch 1 und 2, **dadurch gekennzeichnet, dass** die Bohrung (10) von unten in das Gehäuse (1) gebohrt wurde.

5. Wobbler mit einstellbarer Schwerpunktlage nach den Ansprüchen 1 bis 4, **dadurch gekennzeichnet, dass** die Bohrung (10) mit einer Tiefe von 0,65 bis 0,75 des Durchmessers des Gehäuses (1) in das Gehäuse (1) gebohrt wurde.

6. Wobbler mit einstellbarer Schwerpunktlage nach den Ansprüchen 1 bis 4, **dadurch gekennzeichnet, dass** die Bohrung (10) durch das Gehäuse (1) hindurch gebohrt wurde.

7. Wobbler mit einstellbarer Schwerpunktlage nach den Ansprüchen 1 bis 6, **dadurch gekennzeichnet, dass** der Spiegel (2) in unterschiedlichen Höhen über der Mittelachse (3) Schlaufen (4, 5) zum Anbringen der Angelschnur (6) aufweist.

## Revendications

1. Leurre-nageur ayant un emplacement de centre de gravité ajustable, le leurre-nageur comprenant un boîtier (1), un miroir plat incliné (2) ayant des boucles (4, 5) pour une fixation d'une ligne de pêche (6), des boucles (7, 13) pour une fixation d'hameçons (8, 14), un trou (10) percé à un emplacement prévu du centre de gravité sur l'axe central du boîtier (1), le trou (10) contenant un manchon ayant un filet interne(11) et un poids supplémentaire fileté mobile (12) pour modifier l'emplacement du centre de gravité du boîtier (1), **caractérisé en ce que** le trou (10) est verticalement perpendiculaire à l'axe central (3) du boîtier (1) ; **en ce que** le centre de gravité peut être déplacé plus haut que la hauteur de l'axe central (3) du boîtier (1) ; et **en ce que** le poids supplémentaire (12) présente une densité élevée et est interchangeable.

2. Leurre-nageur ayant un emplacement de centre de gravité ajustable selon la revendication 1, **caractérisé en ce que** le trou (10) a été percé dans le boîtier (1) au niveau de l'emplacement de son centre de gravité déterminé sur son axe central (3).

3. Leurre-nageur ayant un emplacement de centre de gravité ajustable selon les revendications 1 et 2, **caractérisé en ce que** le trou (10) a été percé dans le boîtier (1) par le haut.

4. Leurre-nageur ayant un emplacement de centre de gravité ajustable selon les revendications 1 et 2, **caractérisé en ce que** le trou (10) a été percé dans le boîtier (1) par le bas.

5. Leurre-nageur ayant un emplacement de centre de gravité ajustable selon les revendications 1 à 4, **caractérisé en ce que** le trou (10) a été percé dans le boîtier (1) avec une profondeur de 0,65 à 0,75 du diamètre du boîtier (1).

6. Leurre-nageur ayant un emplacement de centre de gravité ajustable selon les revendications 1 à 4, **caractérisé en ce que** le trou (10) a été percé à travers le boîtier (1).

7. Leurre-nageur ayant un emplacement de centre de gravité ajustable selon les revendications 1 à 6, **caractérisé en ce que** le miroir (2) présente des boucles (4, 5) à différentes hauteurs au-dessus de l'axe central (3) pour une fixation de la ligne de pêche (6).
